# EUROPÄISCHE PATENTANMELDUNG

(11) **EP 2 774 959 A1**
(43) Veröffentlichungstag der Anmeldung: **10.09.2014**
(21) Anmeldenummer: 13158239.7
(22) Anmeldetag: 07.03.2013
(51) Int. Cl.: C09D 5/14, A01N 25/28, C04B 20/10

(54) **Zementäre Beschichtungszusammensetzung und Verfahren zur antimikrobiellen Ausrüstung einer zementären Beschichtungszusammensetzung**

(71) Anmelder: STO SE & Co. KGaA, 79780 Stühlingen (DE)
(72) Erfinder: Duttlinger, Werner, 79848 Bonndorf (DE); Holzer, Michael, 78316 Radolfzell (DE); Restle, Christian, 78250 Tengen-Talheim (DE); Weier, Andreas, 78647 Trossingen (DE); Burgeth, Gerald, 79787 Lauchringen (DE)
(74) Vertreter: Gottschalk, Matthias

(57) **Zusammenfassung**

Die Erfindung betrifft eine zementäre Beschichtungszusammensetzung zur Ausbildung einer Beschichtung, insbesondere Putzschicht, auf einer Gebäudewand oder -decke. Erfindungsgemäß enthält die Zusammensetzung wenigstens einen antimikrobiellen Wirkstoff oder eine antimikrobielle Wirkstoffkombination zum Schutz der Beschichtung vor mikrobiellem Befall oder Bewuchs, wobei der antimikrobielle Wirkstoff oder die antimikrobielle Wirkstoffkombination zur Sicherstellung eines lang anhaltenden Schutzes in verkapselter Form enthalten ist.

Ferner betrifft die Erfindung ein Verfahren zur antimikrobiellen Ausrüstung einer zementären Beschichtungszusammensetzung, insbesondere einer Putzmasse zur Ausbildung einer Putzschicht auf einer Gebäudewand oder -decke.

## Beschreibung

Die Erfindung betrifft eine zementäre Beschichtungszusammensetzung zur Ausbildung einer Beschichtung, insbesondere Putzschicht, auf einer Gebäudewand oder -decke entsprechend dem Oberbegriff des Anspruchs 1. Des Weiteren betrifft die Erfindung ein Verfahren zur antimikrobiellen Ausrüstung einer solchen Zusammensetzung.

### Hintergrund der Erfindung

Zur Ausbildung von Putzschichten auf einer Gebäudewand oder -decke können eine Vielzahl unterschiedlicher Zusammensetzungen verwendet werden. Diese lassen sich jeweils nach Art der enthaltenen Bindemittel, ihrem Abbindeverhalten und/oder ihrer Funktion verschiedenen Gruppen zuordnen. Hinsichtlich der Bindemittel sind Zusammensetzungen mit überwiegend organischen oder anorganischen bzw. mineralischen Bindemitteln zu unterscheiden. Organisch gebundene Zusammensetzungen enthalten häufig Polymerdispersionen als Bindemittel, während anorganisch bzw. mineralisch gebundene Zusammensetzungen häufig Kalk und/oder Zement als Bindemittel enthalten. Letztere werden aufgrund ihres Abbindeverhaltens auch den hydraulisch abbindenden Zusammensetzungen zugeordnet. Hinsichtlich der Funktion lassen sich insbesondere Zusammensetzungen für den Innen- oder Außenbereich sowie Zusammensetzungen zur Ausbildung eines Unter- bzw. Armierungsputzes oder eines Oberputzes unterscheiden.

Bei freier Bewitterung einer Putzschicht besteht regelmäßig die Gefahr, dass Feuchtigkeit in den Putz eindringt, die nicht vollständig abzulüften vermag und somit einen Nährboden für Mikroorganismen bildet. Diese zeichnen sich dann in Form von Verfärbungen an der Oberfläche der Putzschicht ab. Derartige Mikroorganismen können insbesondere Pilze oder Algen sein, die nicht nur optisch unansehnlich sind, sondern ferner zu gesundheitlichen Beeinträchtigungen führen können. Um einen mikrobiellen Befall oder Bewuchs einer Putzschicht zu verhindern, wird oftmals der zur Ausbildung der Putzschicht verwendeten Putzmasse ein antimikrobieller Wirkstoff zugefügt und/oder die Putzschicht nachträglich mit einem Anstrich versehen, der einen antimikrobiellen Wirkstoff enthält. Als nachteilig erweist sich jedoch, dass derartige Wirkstoffe wenig stabil sind, d. h. schnell zerfallen, und bei freier Bewitterung der Putzschicht bzw. des Anstrichs anschließend ausgewaschen werden. Ein Schutz vor mikrobiellem Befall bzw. Bewuchs ist dann nicht mehr gegeben.

Die Stabilität der antimikrobiellen Wirkstoffe hängt unter anderem vom pH-Wert einer Beschichtungszusammensetzung ab. Bei einem pH-Wert > 10 verringert sich die Stabilität erheblich. Hochalkalischen Zusammensetzungen, wie beispielsweise zementären Zusammensetzungen, werden daher keine antimikrobiellen Wirkstoffe zugegeben. Da ein hoher pH-Wert zugleich das Wachstum von Mikroorganismen, wie beispielsweise Pilzen und Algen, verhindert oder zumindest hemmt, wird eine antimikrobielle Ausrüstung derartiger Zusammensetzungen auch nicht als erforderlich angesehen.

Es hat sich jedoch gezeigt, dass der pH-Wert einer zementären Beschichtungszusammensetzung nach deren Applikation auf einer Gebäudewand oder -decke sehr schnell sinken kann, wenn sie - beispielsweise als außen liegende Putzschicht - der freien Bewitterung ausgesetzt ist. Bereits nach einigen Monaten kann der pH-Wert derart gesunken sein, dass die Putzschicht vor einem mikrobiellen Befall bzw. Bewuchs nicht mehr ausreichend geschützt ist.

Aufgabe der Erfindung ist es daher, eine zementäre Beschichtungszusammensetzung zur Ausbildung einer Putzschicht auf einer Gebäudewand oder -decke anzugeben, welche lang anhaltend vor mikrobiellem Befall oder Bewuchs geschützt ist.

Zur Lösung der Aufgabe wird eine Zusammensetzung mit den Merkmalen des Anspruchs 1 vorgeschlagen. Vorteilhafte Weiterbildungen der Erfindung sind den Unteransprüchen zu entnehmen. Darüber hinaus wird ein Verfahren zur mikrobiellen Ausrüstung einer zementären Beschichtungszusammensetzung mit den Merkmalen des Anspruchs 8 angegeben.

### Offenbarung der Erfindung

Die vorgeschlagene zementäre Beschichtungszusammensetzung zur Ausbildung einer Beschichtung, insbesondere Putzschicht, auf einer Gebäudewand oder -decke enthält erfindungsgemäß wenigstens einen antimikrobiellen Wirkstoff oder eine antimikrobielle Wirkstoffkombination zum Schutz der Beschichtung vor mikrobiellem Befall oder Bewuchs. Zur Sicherstellung eines lang anhaltenden Schutzes ist der antimikrobielle Wirkstoff oder die antimikrobielle Wirkstoffkombination in verkapselter Form enthalten. Die Verkapselung bewirkt zum Einen einen Schutz des Wirkstoffs, der sich somit - selbst in einem hochalkalischen Milieu - als sehr stabil erweist. Zum Anderen verzögert die Verkapselung die Abgabe des Wirkstoffs, so dass die antimikrobielle Wirkung vorrangig erst dann zur Entfaltung gelangt, wenn der pH-Wert gesunken ist, so dass die Gefahr eines mikrobiellen Befalls oder Bewuchs besteht.

Die Verkapselung stellt ein seit langem bekanntes Verfahren zur Formulierung von Wirkstoffen dar. Hierbei wird ein Trägermaterial mit wenigstens einem Wirkstoff angereichert und von einem Hüllmaterial umschlossen, das die verzögerte Freisetzung des Wirkstoffs bewirkt. Nicht miteinander verträgliche Wirkstoffe können getrennt verkapselt werden, so dass sie dennoch in Kombination einsetzbar sind. Als Trägermaterial dienen in der Regel wenige Mikrometer große Teilchen, so dass häufig auch von Mikrokapseln die Rede ist. Derartige Mikrokapseln sowie ein Verfahren zu deren Herstellung werden beispielsweise in der DE 28 05 106 A1 beschrieben.

Gegenstand der vorliegenden Erfindung ist daher nicht die Technik der Verkapselung von Wirkstoffen an sich, sondern die Verwendung derartiger Mikrokapseln zur antimikrobiellen Ausrüstung einer zementären Beschichtungszusammensetzung. Gleichwohl die Bereitstellung von Wirkstoffen in verkapselter Form seit langem zum Stand der Technik gehört, gelangte sie in Zusammenhang mit zementären und/oder hochalkalischen Beschichtungszusammensetzungen bislang nicht zum Einsatz.

Gemäß einer bevorzugten Ausführungsform der Erfindung besitzt die Zusammensetzung einen pH-Wert > 10, vorzugsweise > 11, weiterhin vorzugsweise > 12. Es handelt sich demnach bevorzugt um eine hochalkalische Zusammensetzung, in der antimikrobielle Wirkstoffe ohne Verkapselung schnell zerfallen würden. Hier kommen die Vorteile der Erfindung somit besonders gut zum Tragen. Dies gilt umso mehr, als zementäre Beschichtungszusammensetzungen sich besonders gut zur Ausbildung einer Putzschicht eignen. Derartige Zusammensetzungen sind zudem relativ kostengünstig.

Des Weiteren wird vorgeschlagen, dass die Zusammensetzung ein hydraulisches Bindemittel auf Basis von Calciumsilikat, Calciumaluminat und/oder Calciumaluminatferrit, enthält. Der Anteil des hydraulischen Bindemittels beträgt dabei vorzugsweise 2-50 Gew.-%, weiterhin vorzugsweise 3-40 Gew.-% und besonders bevorzugt 4-30 Gew.-% bezogen auf das Trockengesamtgewicht der Ausgangsstoffe. Derartige Zusammensetzungen sind insbesondere zur Ausbildung von Putzschichten geeignet.

Bevorzugt ist der in der Zusammensetzung enthaltene verkapselte antimikrobielle Wirkstoff ein Biozid. Sofern eine antimikrobielle Wirkstoffkombination in verkapselter Form enthalten ist, umfasst diese wenigstens ein Biozid. Biozide, die das Wachstum von Pilzen oder Algen verhindern oder hemmen, werden auch als Fungizide oder Algizide bezeichnet. Derartige Wirkstoffe sind somit insbesondere für den Einsatz in Zusammensetzungen zur Ausbildung von Putzschichten geeignet, die der freien Bewitterung ausgesetzt sind, da hier die Gefahr von Pilzbefall und/oder von Algenbewuchs besonders groß ist. Vorzugsweise ist in der Zusammensetzung daher wenigstens ein Fungizid und/oder Algizid enthalten.

Die verkapselte Zugabe des antimikrobiellen Wirkstoffs bzw. der antimikrobiellen Wirkstoffkombination erlaubt die Verwendung alkaliempfindlicher Biozide. Die erfindungsgemäße Zusammensetzung kann daher auch ein Biozid enthalten, das alkaliempfindlich ist. Die Wahl des Biozids ist somit weitgehend unbeschränkt.

Alternativ oder ergänzend können mehrere nicht miteinander verträgliche Wirkstoffe enthalten sein, die getrennt verkapselt zugegeben sind.

Vorteilhafterweise enthält die Zusammensetzung neben wenigstens einem antimikrobiellen Wirkstoff wenigstens ein weiteres Additiv, mittels dessen die Eigenschaften der Zusammensetzung und/oder der hieraus ausgebildeten Beschichtung beeinflusst werden können. Als Additiv können insbesondere Wasserrückhaltemittel, Verzögerer, Beschleuniger, Netzmittel, Luftporenbildner, Fließmittel, Entschäumer, Hydrophobierungsmittel, Entstaubungsmittel, Fasern und/oder rheologische Additive, jeweils allein oder in Kombination mit einem weiteren Additiv, zugegeben werden. Der Anteil der weiteren Additive beträgt vorzugsweise 0,1-10 Gew.-%, weiterhin vorzugsweise 0,5-7 Gew.-% und besonders bevorzugt 1-5 Gew.-% bezogen auf das Trockengesamtgewicht der Ausgangsstoffe.

Gemäß einer bevorzugten Ausführungsform der Erfindung enthält die Zusammensetzung wenigstens ein Hydrophobierungsmittel als weiteres Additiv. Als Hydrophobierungsmittel können insbesondere Fettsäuresalze, Silane, Siloxane und/oder silanisierte Polymere eingesetzt werden. Durch Zugabe eines Hydrophobierungsmittels kann die Stabilität der zugegebenen antimikrobiellen Wirkstoffe, insbesondere der Biozide, weiter verbessert werden. Der Anteil des Hydrophobierungsmittels oder der Hydrophobierungsmittel beträgt vorzugsweise 0,1-10 Gew.-%, weiterhin vorzugsweise 0,1-5 Gew.-% und besonders bevorzugt 0,2-3 Gew.-% bezogen auf das Trockengesamtgewicht der Ausgangsstoffe.

Alternativ oder ergänzend kann die Zusammensetzung wenigstens ein Entstaubungsmittel als weiteres Additiv enthalten. Als Entstaubungsmittel, d. h. als Antistaubmittel oder Staubbindemittel, eignen sich insbesondere langkettige Kohlenwasserstoffe oder Kohlenwasserstoffgemische, die ggf. auf ein Trägermaterial, wie beispielsweise Kieselerde, aufgebracht werden. Überraschenderweise hat sich im Rahmen von Versuchen gezeigt, dass eine aus einer solchen Zusammensetzung hergestellte Putzschicht nach sechsmonatiger Freibewitterung im Durchschnitt 5-10% mehr biozide Wirkstoffe enthielt als eine entsprechende Zusammensetzung ohne Entstaubungsmittel. Das Entstaubungsmittel verringert somit die Gefahr, dass die bioziden Wirkstoffe ausgewaschen werden. Der Anteil des Entstaubungsmittels oder der Entstaubungsmittel beträgt vorzugsweise 0,1-10 Gew.-%, weiterhin vorzugsweise 0,1-5 Gew.-% und besonders bevorzugt 0,2-3 Gew.-% bezogen auf das Trockengesamtgewicht der Ausgangsstoffe.

Darüber hinaus enthält die Zusammensetzung bevorzugt organische und/oder anorganische Füllstoffe. Vorzugsweise sind carbonatische und silikatische Füllstoffe, wie beispielsweise Kalksteinmehle und Quarzsande, enthalten. Der Anteil der Füllstoffe beträgt vorzugsweise 30-95 Gew.-%, weiterhin vorzugsweise 50-90 Gew.-% und besonders bevorzugt 70-90 Gew.-% bezogen auf das Trockengesamtgewicht der Ausgangsstoffe.

Das ferner zur Lösung der eingangs genannten Aufgabe vorgeschlagene Verfahren zur antimikrobiellen Ausrüstung einer zementären Beschichtungszusammensetzung, insbesondere einer Putzmasse zur Ausbildung einer Putzschicht auf einer Gebäudewand oder -decke, zeichnet sich dadurch aus, dass der Beschichtungszusammensetzung wenigstens ein antimikrobieller Wirkstoff oder eine antimikrobielle Wirkstoffkombination in verkapselter Form zugegeben wird. Die Verkapselung schützt den Wirkstoff bzw. die Wirkstoffe, so dass sich dieser bzw. diese selbst in einem hochalkalischen Milieu als sehr stabil erweisen. Die Verkapselung gewährleistet somit die Wirksamkeit der zugegebenen Wirkstoffe über einen langen Zeitraum. Ferner bewirkt die Verkapselung die verzögerte Freisetzung der Wirkstoffe, so dass sie vorliegend ihre Wirksamkeit erst dann entfalten, wenn der pH-Wert der Putzschicht aufgrund von Witterungseinflüssen gesunken ist und die Gefahr eines mikrobiellen Befalls bzw. Bewuchses besteht. Bei dem antimikrobiellen Wirkstoff handelt es sich insbesondere um ein Biozid. Sofern eine antimikrobielle Wirkstoffkombination zugegeben wird, ist in dieser vorzugsweise wenigstens ein Biozid enthalten.

In Weiterbildung des erfindungsgemäßen Verfahrens wird vorgeschlagen, dass der zementären Beschichtungszusammensetzung wenigstens ein weiteres Additiv zugegeben wird. Beispielsweise können Wasserrückhaltemittel, Verzögerer, Beschleuniger, Netzmittel, Luftporenbildner, Fließmittel, Entschäumer, Hydrophobierungsmittel, Entstaubungsmittel, Fasern und/oder rheologische Additive, jeweils allein oder in Kombination mit einem weiteren Additiv, zugegeben werden. Bevorzugt werden 0,1-10 Gew.-%, vorzugsweise 0,5-7 Gew.-% und weiterhin vorzugsweise 1-5 Gew.-% weitere Additive bezogen auf das Trockengesamtgewicht der Ausgangsstoffe zugegeben.

Vorteilhafterweise wird wenigstens ein Hydrophobierungsmittel als weiteres Additiv zugegeben. Als Hydrophobierungsmittel können insbesondere Fettsäuresalze, Silane, Siloxane und/oder silanisierte Polymere eingesetzt werden. Durch Zugabe eines Hydrophobierungsmittels kann die Stabilität der zugegebenen antimikrobiellen Wirkstoffe, insbesondere der Biozide, weiter verbessert werden. Bevorzugt werden 0,1-10 Gew.-%, vorzugsweise 0,1-5 Gew.-%, weiterhin vorzugsweise 0,2-3 Gew.-% des Hydrophobierungsmittels oder der Hydrophobierungsmittel bezogen auf das Trockengesamtgewicht der Ausgangsstoffe zugegeben.

Alternativ oder ergänzend wird wenigstens ein Entstaubungsmittel als weiteres Additiv zugegeben. Als Entstaubungsmittel, d. h. als Antistaubmittel oder Staubbindemittel, eignen sich insbesondere langkettige Kohlenwasserstoffe oder Kohlenwasserstoffgemische, die ggf. auf ein Trägermaterial, wie beispielsweise Kieselerde, aufgebracht werden. Durch Zugabe des Entstaubungsmittels kann die Gefahr verringert werden, dass die bioziden Wirkstoffe ausgewaschen werden. Der Anteil des Entstaubungsmittels oder der Entstaubungsmittel beträgt vorzugsweise 0,1-10 Gew.-%, weiterhin vorzugsweise 0,1-5 Gew.-% und besonders bevorzugt 0,2-3 Gew.-% bezogen auf das Trockengesamtgewicht der Ausgangsstoffe.

Darüber hinaus werden der Zusammensetzung bevorzugt organische und/oder anorganische Füllstoffe, insbesondere carbonatische und silikatische Füllstoffe, wie beispielsweise Kalksteinmehle und Quarzsande, zugegeben. Der Anteil der Füllstoffe beträgt vorzugsweise 30-95 Gew.-%, weiterhin vorzugsweise 50-90 Gew.-% und besonders bevorzugt 70-90 Gew.-% bezogen auf das Trockengesamtgewicht der Ausgangsstoffe.

Die antimikrobiellen, insbesondere bioziden Wirkstoffe können der Trockenzusammensetzung zugegeben werden oder die Zugabe erfolgt gemeinsam mit dem Anmachwasser, das der Trockenzusammensetzung zur Herstellung einer verarbeitungsfähigen Masse zugegeben wird. Letzeres hat den Vorteil, dass die Wirkstoffe über das Anmachwasser gebunden werden und demnach weniger schnell über Staubentwicklung in die Umwelt gelangen.

Die Erfindung wird nachfolgend anhand der beispielhaft angegebenen erfindungsgemäßen zementären Beschichtungszusammensetzungen näher erläutert. Die angegebenen Beschichtungszusammensetzungen dienen jeweils der Ausbildung einer Oberputzschicht. Die Erfindung ist jedoch nicht auf derartige Beschichtungszusammensetzungen beschränkt.

### Beispiel 1

| | |
|---|---|
| | (Oberputz mit Hydrophobierung) |
| | |
| 16 Gew.-% | Weißzement |
| 79 Gew.-% | Füllstoffe (carbonatische und silikatische Füllstoffe) |
| 0,1 Gew.-% | Verkapseltes IPBC (Wirkstoffgehalt 50%) |
| 0,1 Gew,-% | Verkapseltes OITZ (Wirkstoffgehalt 50%) |
| 0,1 Gew.-% | Verkapseltes Terbutryn (Wirkstoffgehalt 50%) |
| 0,1 Gew.-% | Verkapseltes Diuron (Wirkstoffgehalt 50%) |
| 1,1 Gew.-% | Hydrophobierungsmittel (Fettsäuresalze, silanisiertes Polymer) |
| 3,5 Gew.-% | Weitere Additive |

### Beispiel 2

| | |
|---|---|
| | (Oberputz mit starker Hydrophobierung) |
| | |
| 16 Gew.-% | Weißzement |
| 77,1 Gew.-% | Füllstoffe (carbonatische und silikatische Füllstoffe) |
| 0,1 Gew.-% | Verkapseltes IPBC (Wirkstoffgehalt 50%) |
| 0,1 Gew,-% | Verkapseltes OITZ (Wirkstoffgehalt 50%) |
| 0,1 Gew.-% | Verkapseltes Terbutryn (Wirkstoffgehalt 50%) |
| 0,1 Gew.-% | Verkapseltes Diuron (Wirkstoffgehalt 50%) |
| 3,0 Gew.-% | Hydrophobierungsmittel (Fettsäuresalze, silanisiertes Polymer) |
| 3,5 Gew.-% | Weitere Additive |

### Beispiel 3

| | |
|---|---|
| | (Oberputz ohne Hydrophobierung) |
| | |
| 16 Gew.-% | Weißzement |
| 80,1 Gew.-% | Füllstoffe (carbonatische und silikatische Füllstoffe) |
| 0,1 Gew.-% | Verkapseltes IPBC (Wirkstoffgehalt 50%) |
| 0,1 Gew,-% | Verkapseltes OITZ (Wirkstoffgehalt 50%) |
| 0,1 Gew.-% | Verkapseltes Terbutryn (Wirkstoffgehalt 50%) |
| 0,1 Gew.-% | Verkapseltes Diuron (Wirkstoffgehalt 50%) |
| 3,5 Gew.-% | Weitere Additive |

Die Abkürzung "IPBC" steht dabei für "3-Iodo-2-propynylbutylcarbamat" und die Abkürzung "OITZ" für "n-Octylisothiazolinon-3-on", wobei es sich jeweils -wie auch bei Terbutryn und Diuron - um biozide Wirkstoffe handelt.

Die erfindungsgemäßen Rezepturen, wobei es sich vorliegend um Trockenzusammensetzungen handelt, wurden durch Zugabe von Anmachwasser zu einer pastösen Masse verarbeitet, auf eine Trägerplatte aufgetragen und sechs Monate lang der freien Bewitterung ausgesetzt. Zur Durchführung der Freibewitterungsversuche wurden jeweils gleiche Trägerplatten verwendet und hierauf die Massen in jeweils gleicher Schichtstärke aufgetragen. Nach den sechs Monaten freier Bewitterung wurden die Biozidwerte gemessen und mit den gemessenen Werten zu Beginn der Versuche verglichen.

Zur Analyse des Biozidgehalts einer Schicht wurde diese von der Trägerplatte gelöst, gemahlen und pulverisiert sowie anschließend mit Methanol eluiert. Der Wirkstoffgehalt des Methanolextrakts wurde mittels HPLC ermittelt.

Innerhalb der sechs Monate freier Bewitterung sanken die Biozidwerte bei den erfindungsgemäßen Rezepturen der Beispiele 1-3 wie folgt ab:

### Beispiel 1

| | **t = 0** | **t = 6 Monate** | **Differenz absolut [%]** | **Differenz relativ [%]** |
|---|---|---|---|---|
| **IPBC** | 72% | 48% | 24 | 33 |
| **OITZ** | 54% | 47% | 7 | 13 |
| **Terbutryn** | 72% | 60% | 12 | 17 |
| **Diuron** | 80% | 75% | 5 | 6 |

### Beispiel 2

| | **t = 0** | **t = 6 Monate** | **Differenz absolut [%]** | **Differenz relativ [%]** |
|---|---|---|---|---|
| **IPBC** | 70% | 47% | 23 | 33 |
| **OITZ** | 51% | 44% | 7 | 14 |
| **Terbutryn** | 68% | 62% | 6 | 9 |
| **Diuron** | 76% | 75% | 1 | 1 |

### Beispiel 3

| | **t = 0** | **t = 6 Monate** | **Differenz absolut [%]** | **Differenz relativ [%]** |
|---|---|---|---|---|
| **IPBC** | 69% | 41% | 28 | 41 |
| **OITZ** | 52% | 39% | 13 | 25 |
| **Terbutryn** | 71% | 56% | 15 | 21 |
| **Diuron** | 82% | 66% | 16 | 20 |

Diese Ergebnisse zeigen bereits, dass sich die Hydrophobierung positiv auf die Stabilität der Biozide auswirkt.

Ferner wurden Referenzrezepturen erstellt, die sich von den erfindungsgemäßen Rezepturen lediglich dadurch unterschieden, dass die Biozide unverkapselt zugegeben wurden. Die hieraus hergestellten Massen wurden wiederum auf eine Trägerplatte aufgetragen und sechs Monate lang der freien Bewitterung ausgesetzt.

Innerhalb der sechs Monate der freien Bewitterung sanken die Biozidwerte der Referenzrezepturen (Referenz 1-3 analog Beispiel 1-3) wie folgt ab:

### Referenz 1

| | **t = 0** | **t = 6 Monate** | **Differenz absolut [%]** | **Differenz relativ [%]** |
|---|---|---|---|---|
| **IPBC** | n.b. | n.b. | | |
| **OITZ** | n.b. | n.b. | | |
| **Terbutryn** | 50% | 32% | 18 | 36 |
| **Diuron** | 66% | 59% | 7 | 11 |

Nach sechs Monaten wurden 47 % weniger Terbutryn und 21 % weniger Diuron als bei der gleichen Beschichtung jedoch mit verkapselten Bioziden (Beispiel 1) gefunden.

### Referenz 2

| | **t = 0** | **t = 6 Monate** | **Differenz absolut [%]** | **Differenz relativ [%]** |
|---|---|---|---|---|
| **IPBC** | n.b. | n.b. | | |
| **OITZ** | n.b. | n.b. | | |
| **Terbutryn** | 53% | 35% | 18 | 34 |
| **Diuron** | 72% | 51% | 21 | 29 |

Nach sechs Monaten wurden 44 % weniger Terbutryn und 33 % weniger Diuron als bei der gleichen Beschichtung jedoch mit verkapselten Bioziden (Beispiel 2) gefunden.

### Referenz 3

| | **t = 0** | **t = 6 Monate** | **Differenz absolut [%]** | **Differenz relativ [%]** |
|---|---|---|---|---|
| **IPBC** | n.b. | n.b. | | |
| **OITZ** | n.b. | n.b. | | |
| **Terbutryn** | 35% | 29% | 6 | 17 |
| **Diuron** | 51% | 45% | 6 | 12 |

Nach sechs Monaten wurden 48 % weniger Terbutryn und 32 % weniger Diuron als bei der gleichen Beschichtung jedoch mit verkapselten Bioziden (Beispiel 3) gefunden.

Die Angabe "n. b." bedeutet "nicht bestimmbar innerhalb der Fehlergrenzen der Analysemethode".

Diese Ergebnisse zeigen, dass die Stabilität der bioziden Wirkstoffe durch die vorgeschlagene Verkapselung deutlich verbessert werden konnte.

In einer weiteren, leicht modifizierten Versuchsreihe konnten diese Werte verifiziert werden. In dieser zweiten Versuchsreihe enthielten alle zementären Beschichtungszusammensetzungen noch zusätzlich ein handelsübliches Entstaubungsmittel. Überraschenderweise hat sich gezeigt, dass nach sechs Monaten freier Bewitterung im Durchschnitt etwa 5 bis 10 % mehr biozide Wirkstoffe gefunden werden konnten als bei gleichen Rezepturen jedoch ohne Entstaubungsmittel.

Als besonders vorteilhaft erweist sich demnach eine Rezeptur, die neben verkapselten Bioziden und Hydrophobierungsmittel ferner Entstaubungsmittel enthält. Eine solche Rezeptur wird nachfolgend als weiteres erfindungsgemäßes Ausführungsbeispiel (Beispiel 4) genannt.

### Beispiel 4

| | |
|---|---|
| (Oberputz mit Hydrophobierung und mit Entstaubungsmittel) | |
| | |
| 16 Gew.-% | Weißzement |
| 78 Gew.-% | Füllstoffe (carbonatische und silikatische Füllstoffe) |
| 0,1 Gew.-% | Verkapseltes IPBC (Wirkstoffgehalt 50%) |
| 0,1 Gew,-% | Verkapseltes OITZ (Wirkstoffgehalt 50%) |
| 0,1 Gew.-% | Verkapseltes Terbutryn (Wirkstoffgehalt 50%) |
| 0,1 Gew.-% | Verkapseltes Diuron (Wirkstoffgehalt 50%) |
| 1,1 Gew.-% | Hydrophobierungsmittel (Fettsäuresalze, silanisiertes Polymer) |
| 1,0 Gew.-% | Antistaubmittel |
| 3,5 Gew.-% | Weitere Additive |

## Patentansprüche

1. Zementäre Beschichtungszusammensetzung zur Ausbildung einer Beschichtung, insbesondere Putzschicht, auf einer Gebäudewand oder -decke, **dadurch gekennzeichnet, dass** die Zusammensetzung wenigstens einen antimikrobiellen Wirkstoff oder eine antimikrobielle Wirkstoffkombination zum Schutz der Beschichtung vor mikrobiellem Befall oder Bewuchs enthält, wobei der antimikrobielle Wirkstoff oder die antimikrobielle Wirkstoffkombination zur Sicherstellung eines lang anhaltenden Schutzes in verkapselter Form enthalten ist.

2. Zusammensetzung nach Anspruch 1,
**dadurch gekennzeichnet, dass** die Zusammensetzung einen pH-Wert > 10, vorzugsweise > 11, weiterhin vorzugsweise > 12 besitzt.

3. Zusammensetzung nach Anspruch 1 oder 2,
**dadurch gekennzeichnet, dass** die Zusammensetzung ein hydraulisches Bindemittel auf Basis von Calciumsilikat, Calciumaluminat und/oder Calciumaluminatferrit enthält, wobei der Anteil des hydraulischen Bindemittels vorzugsweise 2-50 Gew.-%, weiterhin vorzugsweise 3-40 Gew.-% und besonders bevorzugt 4-30 Gew.-% bezogen auf das Trockengesamtgewicht der Ausgangsstoffe beträgt.

4. Zusammensetzung nach einem der vorhergehenden Ansprüche,
**dadurch gekennzeichnet, dass** der antimikrobielle Wirkstoff ein Biozid ist oder die antimikrobielle Wirkstoffkombination wenigstens ein Biozid umfasst.

5. Zusammensetzung nach Anspruch 4,
**dadurch gekennzeichnet, dass** das Biozid alkaliempfindlich ist.

6. Zusammensetzung nach einem der vorhergehenden Ansprüche,
**dadurch gekennzeichnet, dass** die Zusammensetzung wenigstens ein weiteres Additiv enthält, wobei der Anteil des Additivs oder der Additive vorzugsweise 0,1-10 Gew.-%, weiterhin vorzugsweise 0,5-7 Gew.-% und besonders bevorzugt 1-5 Gew.-% bezogen auf das Trockengesamtgewicht der Ausgangsstoffe beträgt.

7. Zusammensetzung nach einem der vorhergehenden Ansprüche,
**dadurch gekennzeichnet, dass** die Zusammensetzung wenigstens ein Hydrophobierungsmittel als weiteres Additiv enthält, wobei der Anteil des Hydrophobierungsmittels oder der Hydrophobierungsmittel vorzugsweise 0,1-10 Gew.-%, weiterhin vorzugsweise 0,1-5 Gew.-% und besonders bevorzugt 0,2-3 Gew.-% bezogen auf das Trockengesamtgewicht der Ausgangsstoffe beträgt.

8. Zusammensetzung nach einem der vorhergehenden Ansprüche,
**dadurch gekennzeichnet, dass** die Zusammensetzung wenigstens ein Entstaubungsmittel als weiteres Additiv enthält, wobei der Anteil des Entstaubungsmittels oder der Entstaubungsmittel vorzugsweise 0,1-10 Gew.-%, weiterhin vorzugsweise 0,1-5 Gew.-% und besonders bevorzugt 0,2-3 Gew.-% bezogen auf das Trockengesamtgewicht der Ausgangsstoffe beträgt.

9. Zusammensetzung nach einem der vorhergehenden Ansprüche,
**dadurch gekennzeichnet, dass** die Zusammensetzung organische und/oder anorganische Füllstoffe enthält, wobei der Anteil der Füllstoffe vorzugsweise 30-95 Gew.-%, weiterhin vorzugsweise 50-90 Gew.-% und besonders bevorzugt 70-90 Gew.-% bezogen auf das Trockengesamtgewicht der Ausgangsstoffe beträgt.

10. Verfahren zur antimikrobiellen Ausrüstung einer zementären Beschichtungszusammensetzung, insbesondere einer Putzmasse zur Ausbildung einer Putzschicht auf einer Gebäudewand oder -decke,
**dadurch gekennzeichnet, dass** der Beschichtungszusammensetzung wenigstens ein antimikrobieller Wirkstoff oder eine antimikrobielle Wirkstoffkombination in verkapselter Form zugegeben wird.
